# EUROPÄISCHE PATENTSCHRIFT

(11) **EP 0 447 681 B1**
(45) Veröffentlichungstag und Bekanntmachung des Hinweises auf die Patenterteilung: **28.07.1993**
(21) Anmeldenummer: 90125532.3
(22) Anmeldetag: 27.12.1990
(51) Int. Cl.: A23L 1/317, A23L 1/314, A23B 4/02

(54) **Verfahren zur Herstellung von Brühwurst aus nicht schlachtwarmem Fleisch**
Process for preparing broiled sausage from slaughter meat having lost its hot meat properties.
Procédé de préparation de saucisse bouillie à partir de viande d'abattage refroidie

(30) Priorität: 16.02.1990 DE 4004865
(43) Veröffentlichungstag der Anmeldung: 25.09.1991
(73) Patentinhaber: AROTOP FOOD CREATION GMBH & CO. KG, D-55131 Mainz (DE)
(72) Erfinder: Vösgen, Walter, Dr., W-6509 Undenheim (DE)
(74) Vertreter: Nix, Frank Arnold, Dr.

(56) Entgegenhaltungen:
- EP-A- 0 141 875
- EP-A- 0 209 268
- JOURNAL OF FOOD SCIENCE, Band 44, Nr. 3, 1979, Seiten 857-858, Institute of Food Technologists; D.W. PETERSON et al.: "Prevention of toughening of chicken breast muscle cut immediately after slaughter by control of pH decline"
- WPIL/DERWENT, Zusammenfassung Nr. 84-176255 [28], Derwent Publications Ltd, Londen, GB; & SU-A-1 053 805 (TBILISI UNIV.)
- JAPANESE PATENT ABSTRACTS/JPO, Derwent Publications Ltd, Londen, GB; & JP-A-58 094 342 (AOBA KASEI K.K.)

## Beschreibung

Die vorliegende Erfindung bezieht sich auf ein Verfahren zur Herstellung von Brühwurst auf dem Wege der Kaltfleischverarbeitung, also aus nicht schlachtwarmem Fleisch.

Die Verarbeitung von schlachtwarmem Fleisch, z.B. zur Brühwurstherstellung, bereitet wenig Probleme der Erzielung von schnittfester, homogener Wurstmasse. Schlachtwarmes Fleisch besitzt ein hohes Wasserbindungsvermögen. Die Eiweißanteile des Muskelfleisches liegen gelöst vor, die Abstände zwischen den Eiweißfibrillen sind sehr weit, sodaß Wasser ideal an den hydrophilen Polen der Eiweißfraktionen angelagert werden kann.

Ein solches Material verhält sich optimal bei der Brühwurstherstellung, wo es darauf ankommt, Magerfleisch und Fett mit Wasser fein zu zerkleinern und in einen stabilen Zustand zu bringen, der als Vielphasengemisch von Emulsion, Suspension, Gel und Sol angesehen wird. Dieses Gemisch muß sich während der nachfolgenden Erhitzung (Brühprozeß) zusammenhängend verfestigen (koagulieren), damit schnittfeste Wursterzeugnisse erhalten werden. Idealerweise zeigen die Enderzeugnisse keinen Fett- und keinen Gelee/Wasserabsatz.

In der Praxis ist eine Verarbeitung von schlachtwarmem Fleisch meist nicht möglich. Einige Stunden nach dem Schlachten tritt die Rigor-mortis-Veränderung des Fleisches ein, die dadurch gekennzeichnet ist, daß die Muskelfibrillen sich schließen und Verbindungen zwischen den Muskelsträngen auftreten, wodurch kaum noch Anlagerungspole für Wasser vorhanden sind. Dadurch verliert das Magerfleisch sein Wasserbindungsvermögen und bei der Erhitzung setzen sich in Wasser gelöste Eiweißanteile als Gelee ab. Die mangelhafte Emulgierfähigkeit der Eiweißbestandteile führt auch zu Fettseparationen.

Um trotz dieser Bedingungen nicht schlachtwarmes Fleisch für die Brühwurstherstellung verwenden zu können, bedient man sich der sogenannten Kutterhilfsmittel (Kuttersalze), insbesondere Salze der Citronensäure (Citrate) und Diphosphate, eventuell mit höheren Homologen der o-Phosphorsäure. Diese werden zusammen mit dem zu verarbeitenden Fleisch in den Kutter gegeben.

Die Wirksamkeit dieser Stoffe ist bis ins letzte Detail noch nicht bekannt. Citrate wirken anscheinend vorwiegend durch ihre Fähigkeit, polyvalente Ionen zu binden und damit die Bindung zwischen den Myofibrillen aufzubrechen. Diphosphate besitzen neben diesen Fähigkeiten beachtliche energetische Potentiale, die sie in die Nahe der physiologisch für die Muskelarbeit notwendigen Adenosintriphosphate (ATP) und Adenosindiphosphate (ADP) stellen. Neben diesen Eigenschaften sorgen Citrat- und Phosphatzusätze auch für merkbare pH-Wert-Erhöhungen im bearbeiteten Fleisch. Diesen pH-Wert-Erhöhungen ist in der Vergangenheit bei der Erklärung der Phänomene um die Rolle der Kutterhilfsmittel bei der Brühwurstherstellung aus nicht schlachtwarmem Fleisch wenig Bedeutung zugemessen worden.

Als bestimmende Größe bei der Beschreibung der Wasserbindungsverbesserung von nicht schlachtwarmem Fleisch wird besonders die sogenannte Ionenstärke hervorgehoben. Man versteht darunter das Einbringen von Verbindungen (Salzen) in das wässrige Wurstbrät, die in starke Ionen, bevorzugt einwertige Ionen, dissoziieren. Diese Ionen treten in Konkurrenz zu den schwächeren Bindungen der Muskeleiweißstränge und trennen diese durch Besetzung der entsprechenden Ladungszentren auf. Die höchste Wirksamkeit zeigt in dieser Beziehung das Natrium-Ion. Kochsalz, also Natriumchlorid, gilt damit als das beste Kutterhilfsmittel überhaupt. Eine Herstellung von schnittfester Brühwurst ohne Kochsalz ist aus diesen Gründen nicht denkbar. Der Produktion natriumreduzierter Brühwurst sind ebenfalls Grenzen gesetzt.

Die beste Wirkung von Kochsalz liegt bei etwa 5% Zugabe zur Wurstbrätmasse. Diese Dosierung ist aber aus geschmacklichen Gründen viel zu hoch, maximal 2,5% Salz sind bei einer Brühwurst vertretbar. Eine Alternative zu Kochsalz bezüglich der technologischen Wirkung auf das Wasserverbindungsvermögen ist bisher nicht bekannt (Fleischerei 9 (1989) 1026-1030).

Die bekannten Kutterhilfsmittel sind überdies meist lebensmittelrechtlich Zusatzstoffe, die einer Kennzeichnungspflicht unterliegen, was oft als Mangel angesehen wird.

Auch die Zugabe von natriumhaltigen Salzen der Kohlensäure, also Natriumkarbonat oder Natriumhydrogenkarbonat, bei der Fleischverarbeitung ist bekannt. In der US-PS 1 039 873 wird die Zugabe dieser Salze zur Salzlake beim Pökeln von Fleisch vorgeschlagen, was eine schnellere und bessere Wirkung der Pökellake bewirken soll. Um die Herstellung von Brühwurst geht es hierbei nicht.

In ähnlicher Weise ist aus der Veröffentlichung Patent Abstracts of Japan, und zwar zur JP-Schutzrechtsschrift 58-94342(A) die Zugabe von Natriumkarbonat und Natriumhydrogenkarbonat zu Fleischprodukten bekannt, um deren Haltbarkeit zu erhöhen. Auch hier geht es nicht um ein Kuttern bei der Brühwurstherstellung und die hierbei auftretenden Probleme sind in der genannten Zusammenfassung nicht angesprochen.

Überraschenderweise hat sich gezeigt, daß die genannten natriumhaltigen Salze der Kohlensäure, die bisher nicht als mögliche Kutterhilfsmittel betrachtet wurden, die eingangs genannten Schwierigkeiten zu überwinden geeignet sind.

In der Fachwelt wurde das Alkalischstellen von Wurstbrätmassen immer verbunden mit der Gefahr einer Verseifung der Fettanteile. Aus diesem Grunde wurde in Deutschland auch der pH-Wert der Kutterhilfsmittel in einer 0,5 %igen wäßrigen Lösung auf höchstens 7,3 begrenzt. Bei der vorliegend vorgeschlagenen Methode sind die Zugabemengen von alkalischen Karbonaten aber so gering, daß Verseifungen ausgeschlossen sind. Der pH-Wert der behandelten Wurstmasse bleibt dann auch idealerweise deutlich unter 7,0.

Wenn gemäß der Erfindung die Behandlung des Fleisches mit dem Natriumsalz der Kohlensäure in zeitlichem Abstand vor der Kutterverarbeitung, nämlich insbesondere wenigstens 10 bis 24 Stunden vor der Kutterverarbeitung, stattfindet und durch die Behandlung der pH-Wert in der Wurstmasse auf einen Wert zwischen 6,0 und 7,5, vorzugsweise zwischen 6,5 und 6,8, eingestellt wird, setzt die Wirkung der Karbonate als Kutterhilfsmittel optimal ein, während bei direkter Zugabe in den Kutter nur geringe Effekte zu beobachten sind. Überraschend durchschlagend wird die Wirkung durch die Vorbehandlung, wobei die verwendeten Salze dann auch nicht als Kutterhilfsmittel sondern als Kutter-Vorbereitungsmittel anzusehen sind.

Insbesondere kann gemäß der Erfindung sogar das billige Natriumkarbonat verwendet werden. Tatsächlich bewirken auch die Natriumsalze der Kohlensäure die notwendige Erhöhung der Ionenstärke durch die Entstehung dissoziierter Natriumionen. Mit der Zugabe gering alkalisch wirkender Karbonate ist eine leichte pH-Wert-Erhöhung verbunden, die der Öffnung der Proteinverbindungen ebenfalls förderlich ist.

Beim erfindungsgemäßen Vorgehen ist die Erzeugung der notwendigen Ionenstärke im Magerfleisch nicht mit geschmacklichen Auswirkungen verbunden. Bei Einsatz insbesondere von Natriumcarbonat (Na₂CO₃) erfolgt eine Dissoziation nach Na⁺ und CO₃²⁻. Die Natriumionen besetzen zielgemäß die durch Öffnung der Proteinstränge freiwerdenden Ladungszentren. Die Karbonanionen (CO₃²⁻) zerfallen unter diesen Bedingungen über Kohlensäure zu Wasser und Kohlendioxid. Der Gesamtvorgang verläuft geschmacksneutral.

Ein weiterer Vorteil ist, daß das erfindungsgemäße Vorgehen als-zusatzstofffreie Herstellung von Brühwürsten aus nicht schlachtwarmem Fleisch gelten kann. Gemäß § 11 Abs. 2 Nr. 1 LMBG entfällt das Verbot, nicht zugelassene Zusatzstoffe zu verwenden, wenn solche Stoffe "... in dem zur Abgabe an den Verbraucher ... bestimmten Erzeugnis nur als technisch unvermeidbare und technologisch unwirksame Reste in gesundheitlich, geruchlich und geschmacklich unbedenklichen Anteilen enthalten sind." Diese Bedingungen werden von den Salzen der Kohlensäure in allen Punkten voll erfüllt. Der Einsatz solcher Salze, ist also für Fleischwaren zugelassen, eine Zusatzstoffkennzeichnungspflicht besteht nicht.

Wesentlich ist auch noch der Vorschlag gemäß Ansprüchen 3 und 4, beim Kuttern sauer wirkende Stoffe zuzusetzen. Hierdurch wird der pH-Wert wieder gesenkt und eine bessere Umrötung und Farbhaltung erzielt. Als sauer wirkende Stoffe sind vorteilhaft zu verwenden Ascorbinsäure und/oder Genußsäuren wie Zitronensäure, Essigsäure, Milchsäure oder Weinsäure.

Nachfolgend soll als konkretes Ausführungsbeispiel der Erfindung eine Standardrezeptur für Wiener Würstchen angeführt werden.

Ein Brühwurstbrät, bestehend aus
30% Schweinefleisch der Qualitätsstufe SII/SIII
30% Rindfleisch der Qualitätsstufe RII/RIII
40% Speck der Qualitätsstufe SIV
wird am Abend grob zerkleinert und mit einer wässrigen Lösung, die 1 g Natriumcarbonat pro kg Fleisch enthält, vermischt. Das so behandelte Fleisch kann am nächsten Morgen, nach mindestens 12 bis 14 Stunden Einwirkzeit, ganz normal mit Eis, Nitritpökelsalz und Gewürzen gekuttert werden. Da der für die Umrötung ideale niedrige pH-Wert nicht vorliegt wird Ascorbinsäure als Umrötehilfsmittel eingesetzt. Weitere, bisher unbedingt notwendige Kutterhilfsmittel sind bei dieser Art der Produktion von Brühwurst aus nicht schlachtwarmem Fleisch entbehrlich.

## Patentansprüche

1. Verfahren zur Herstellung von Brühwurst aus nicht schlachtwarmem Fleisch, wobei dem Fleisch natriumhaltige Salze der Kohlensäure zugesetzt werden,
dadurch gekennzeichnet, daß die natriumhaltigen Salze der Kohlensäure dem zerkleinerten Fleisch wenigstens 10 bis 24 Stunden vor der Kutterbehandlung zugesetzt werden und daß durch die Behandlung der pH-Wert in der Wurstmasse auf einen Wert zwischen 6,0 und 7,5 eingestellt wird.

2. Verfahren nach Anspruch 1, dadurch gekennzeichnet, daß der pH-Wert in der Wurstmasse auf einen Wert zwischen 6,5 und 6,8 eingestellt wird.

3. Verfahren nach Anspruch 1 oder 2, dadurch gekennzeichnet, daß beim Kuttern sauer wirkende Stoffe zugegeben werden.

4. Verfahren nach Anspruch 3, dadurch gekennzeichnet, daß als sauer wirkende Stoffe Ascorbinsäure und/oder Zitronensäure und/oder Essigsäure und/oder Milchsäure und/oder Weinsäure verwendet wird.

## Claims

1. Process for preparing cooked sausage from meat that has lost its hot meat properties, wherein sodium-containing salts of carbonic acid are added to the meat, characterised in that the sodium-containing salt of carbonic acid is added to the comminuted meat at least 10 to 24 hours before the cutter processing and that the pH in the sausage meat is adjusted to a value between 6.0 and 7.5 by the treatment.

2. Process according to claim 1, characterised in that the pH in the sausage meat is adjusted to a value between 6.5 and 6.8.

3. Process according to claim 1 or 2, characterised in that acidic substances are added in the cutter processing.

4. Process according to claim 3, characterised in that ascorbic acid and/or citric acid and/or acetic acid and/or lactic acid and/or tartaric acid is used as acidic substance.

## Revendications

1. Procédé de préparation de saucisse à bouillir à partir de viande d'abattage refroidie, en ajoutant des sels sodés de l'acide carbonique à la viande, caractérisé par le fait que les sels sodés de l'acide carbonique sont ajoutés à la viande coupée au moins 10 à 24 heures avant le traitement dans la machine à préparer la chair à saucisse et que le traitement établit la valeur pH dans la chair à saucisse à une valeur comprise entre 6,0 et 7,5.

2. Procédé selon la revendication 1, caractérisé par le fait que la valeur pH dans la chair à saucisse est établie à une valeur comprise entre 6,5 et 6,8.

3. Procédé selon la revendication 1 ou 2, caractérisé par le fait que lors de la préparation de la chair à saucisse on ajoute des matières à action acide.

4. Procédé selon la revendication 3, caractérisé par le fait que les matières à action acide utilisées sont l'acide ascorbique et/ou l'acide citrique et/ou l'acide acétique et/ou l'acide lactique et/ou l'acide tartrique.
